# EUROPEAN PATENT SPECIFICATION

(11) **EP 1 670 319 B1**
(45) Date of publication and mention of the grant of the patent: **29.10.2008**
(21) Application number: 04764534.6
(22) Date of filing: 26.08.2004
(51) Int. Cl.: A23D 7/005, A23C 9/15, A23D 7/02, A23C 13/14

(54) **PROCESS FOR THE PREPARATION OF A WATER CONTINUOUS ACIDIFIED EMULSION AND PRODUCT OBTAINABLE BY THE PROCESS**
VERFAHREN ZUR HERSTELLUNG EINER ANGESÄUERTEN EMULSION MIT GESCHLOSSENER WASSERPHASE SOWIE MIT DIESEM VERFAHREN ERHÄLTLICHES PRODUKT
PROCEDE DE PREPARATION D'UNE EMULSION ACIDIFIEE CONTINUE CONTENANT DE L'EAU ET PRODUIT AINSI OBTENU

(30) Priority: 10.10.2003 EP 03078162
(43) Date of publication of application: 21.06.2006
(73) Proprietor: Unilever N.V., 3013 AL Rotterdam (NL); Unilever PLC, London Greater London EC4P 4BQ (GB)
(72) Inventor: BOT, Arjen Unilever R & D Vlaardingen, 3133 AT Vlaardingen (NL); KIOKIAS, Sotirios Unilever R & D Vlaardingen, 3133 AT Vlaardingen (NL); REIFFERS-MAGNANI, Ch., Unilever R & D Vlaardingen, 3133 AT Vlaardingen (NL); RESZKA, Aleksander Arie Unilever R & D Vlaardingen, 3133 AT Vlaardingen (NL)
(74) Representative: Joppe, Hermina Laura Petronella
(86) International application number: PCT/EP2004/009560
(87) International publication number: WO 2005/041676

(56) References cited:
- EP-A- 0 560 429
- EP-A- 0 603 981
- EP-A- 1 201 134
- WO-A-97/08956
- WO-A-03/043430
- DE-A- 3 907 676
- US-A- 5 698 254

## Description

### Field of the Invention

The invention relates to a process for preparing a water continuous spreadable acidified food product comprising fat and protein that is stable to cyclic temperature changes. The invention also relates to a food product that is a water continuous emulsion that comprises fat and protein that is stable when the product is subjected to cyclic temperatures changes between that of storage at refrigeration temperatures and exposure to ambient temperatures when being used.

### Background Art

Water continuous emulsions as food products have been prepared starting with fat and have been used as spreads on a variety of food products like on bread and toast.
Spreads should have a good mouthfeel; meaning that they should have a not too high melting point and a steep melting line such that the spread melts quickly in the mouth upon consumption and no waxy mouthfeel is apparent.
In addition, the consumer prefers that the spreadable product maintains its firm shape when stored at refrigeration conditions as well as when taken out for use at ambient temperatures. The product should also have a soft consistency such that when it is applied on a soft surface like a bread, it should spread easily and not tear the bread. The source of the fat for preparing such products are of diary, vegetable, or marine origin. The protein contributes to the texture of such products and proteins have been used from dairy source like milk and from vegetable source like soy and pea. Processes to prepare such products have been described in the prior art.

WO97/08956 (Unilever, 1997) describes a vegetable and dairy fat based spread that comprises fat of which 10-55% is a non-dairy fat, up to 4.5% milk protein, gelatine or gelatine replacer and optionally up to 1% structuring agent and having a pH in the range of 4.6 to 5.2 and a Stevens firmness value of 200-500 g at 20°C and a value of 50-250 g at 20°C. The process for preparing this comprises the steps of pasteurising the desired mixture by heating to high temperature, cooling to a culturing temperature, adding acidifying bacteria to acidify the mixture to the desired pH, heating the mixture to above 60°C to inactivate the culturing organisms, followed by homogenising the mixture at 50-600 bar, preferably at a temperature higher than 60°C followed by filling in container and cooling to desired temperatures.

WO03/043430 (Unilever, 2003) describes a food product having a dispersed oil phase and a continuous aqueous phase, the product comprising 5 to 40% fat of either dairy, vegetable or marine source, from 0.05 to 15% protein and 0.01 to 3% biopolymer the product having a pH in the range of 3.7 to 5.8. The product is prepared by a process comprising the steps of preparing the aqueous phase, mixing the aqueous phase with fat, heating to a pasteurisation temperature, homogenising the mixture at a temperature above the melting point of the fat, acidification to the desired pH and followed by one more step of homogenisation.

International Dairy Journal 12 (2002) 889-897 describes experiments where model oil-in-water emulsion were prepared. Experiments were conducted where the samples were heated before homogenisation and also where samples were heated after homogenisation. However the samples were prepared close to neutral pH (6 to 8).

The consumer often stores the product in the refrigerator (which may be from about 1 to 12°C) for ensuring extended use and takes the product out for consumption when the product warms up to ambient temperatures (of about 20 to 30°C). After some of the product is used, the container is placed back in the refrigerator. This temperature cycling may occur many times over the time the contents of the container are used up. Spreads based on butterfat or milkfat, and other crystalline fat, like the ones in EP-A-603981 and EP-A-1201134, DE-3324821, DE-3907676 remain stable under such conditions; their consistency does not change much. In addition, spreads made from liquid oil (not crystalline) such as sunflower oil are also stable when subjected to temperature cycling and do not harden.

Fats that are partly crystalline, have a lipid phase comprising both fat solids (crystals) and fluid oil. Examples of partly crystalline fat are fat blends with fully hardened coconut fat and/or fully hardened palmkernel oil and palm oil and/or palm oil fractions. These fat blends have a good melting point and a steep melting curve. They provide an emulsion with a good mouthfeel. In addition due to their low unsaturated fatty acid content they have less oxidation problems and therefore less off-taste development upon storage. These fats are therefore suitable to be used in dairy cream alternatives and spreads. However, it has been found by the inventors that heated acidified emulsions made of partly crystalline fat, especially the fat blends with fully hardened coconut fat, and/or fully hardened palmkernel oil and palm oil or palm oil fractions, are unstable when subjected to cyclic temperature changes. This was unexpected, as their neutral counterparts based on native protein were stable under temperature cycling. In addition, due to their relative high protein content they were expected to be stable. The emulsions made of partly crystalline fat did not show any hardening upon storage at low temperature but did show an increase in firmness (post-hardening) when subjected to temperature cycling, which is evidenced by an increase in droplet size, measured as d_{3,2} (coalescence). This post-hardening of the product has a negative impact on the spreadability. The post-hardening effect is especially seen in emulsion with a fat content of 15 wt% fat or higher.

The present inventors have now surprisingly found that products that are prepared with a specific ratio of denatured protein to fat and total protein content before homogenisation are much more stable to the cyclic temperature changes that the product undergoes during its extended use. These products are prepared by a process with a specific sequence in process steps.

It is thus an object of the present invention to provide a process to prepare water continuous acidified emulsions that can be used as spreads and are stable to cyclic temperature changes that the product undergoes during use.

It is another object of the present invention to provide an improved process to prepare the emulsions which, in addition to having the desired property of stability under cyclic temperature conditions, can be processed in the manufacturing units of the prior art with minimal modifications and therefore making the processing highly cost effective.

It is yet another object of the present invention to provide for water continuous acidified emulsions comprising fat and protein which may be used as a spread and in addition to having the most important consumer attributes of the prior art food products are also stable to cyclic temperature changes.

### Summary of the invention

The first aspect of the invention provides a process for the preparation of a water continuous acidified emulsion comprising 15 to 50 wt% of a partly crystalline fat and 1 to 6 wt% protein, wherein the process comprises the sequence of homogenising at a temperature below 60°C, a water continuous emulsion comprising a partly crystalline fat and protein wherein the percentage of denatured protein on total protein is less than 100-(2.6 * a/b), wherein a is the amount of fat on the total product in wt% en b is the amount of total protein on the product in wt%, heating to a temperature above 80°C for a time longer than 5 minutes, and acidifying to a pH below the pH of gelling of the protein having the highest pH of gelling in the emulsion.

A second aspect of the invention provides for a process for the preparation of a water continuous acidified emulsion comprising 15 to 50 wt% partly crystalline fat and 1 to 6 wt% protein, wherein the process comprises the sequence of homogenising at a temperature below 60°C, a water continuous emulsion comprising fat and protein wherein the percentage of denatured protein is less than 20% on total protein, heating to a temperature and for sufficient time to prepare an emulsion wherein the percentage of denatured protein is more than 20% on total protein and acidifying to a pH below the pH of gelling of the protein having the highest pH of gelling in the emulsion.

Another aspect of the invention provides for a water continuous acidified emulsion prepared by the process according to the first or second aspect of the invention.

### Detailed description of the invention

The emulsion of the present invention is preferably used as a spread on products like bread toast and crackers or as a semisolid acidified cream. The emulsion essentially comprises fat and protein dispersed in an aqueous medium.

The fat or fat blend used for this invention is partly crystalline and comprises a vegetable fat. Partly crystalline fat is a fat with a lipid phase comprising both solid fat (crystals) and liquid oil. The solid fat content may be described in terms of Nₜ, wherein N is the amount of solids in wt% on total fat at temperature t. The amount of solid fat may suitably be measured with NMR. For the present invention, partially crystalline fat means that the fat should have a solid fat content of at least 40%, preferably more than 50%, and most preferably more than 65% at storage temperature (5°C) and between 0.1 and 10% at elevated temperature (25°C), more preferably between 10 and 2% an most preferably between 6 and 2.4%.

Fat is present in the emulsion as prepared by the process of the invention in an amount from 15 to 50 wt% more preferably from 15 to 35% and more preferably from 15 to 25 wt% or from 15 to 20 wt%.

The fat may be a single fat or a blend of different fats, and it may fractionated.

It was found that homogenised emulsions with a fat content lower than 15 wt% are stable upon temperature cycling. Without wishing to be bound to theory, the inventors believe that the fat droplets of emulsions based on partly crystalline fat partially coalesce upon temperature cycling, which is evidenced by the increase in droplet size, resulting in the firming of the product. In homogenised emulsions with less than 15 wt% fat, the fat droplets appear to be too far apart to coalesce under the conditions of temperature cycling.

The protein used may be any edible protein source but is preferably chosen from one or more of protein like milk protein, soy protein, or pea protein. The milk protein is highly preferred due to its taste and is preferably chosen from milk, skim milk powder, butter milk powder, butter serum powder, whey, whey powder concentrate, whey protein isolate or caseinate. The most preferred proteins are whey, whey protein isolate or whey protein concentrate. Protein is present from 1 to 6 wt%, preferably from 1 to 4 wt%, more preferably from 2 to 4% and most preferably from 2 to 3 wt% in the product as prepared by the process of the invention.

The inventors have also found that the amount of denatured protein in the emulsion before homogenisation is of importance for the stability of the emulsions. Therefore the percentage of denatured protein on total protein should be less than 100-(2.6 * a/b), wherein a is the amount of fat on the total product in wt% en b is the amount of total protein on the product in wt%. It was found that the maximum tolerable percentage of denatured protein depends on the total amount of protein present and on the total amount of fat in the emulsion. Without wishing to be bound to theory, it is believed that the emulsion remains stable during temperature cycling only if before homogenisation sufficient amount of native protein, i.e. non-denatured protein, is present at the oil-water interface of the emulsion to provide a surface coverage of the fat droplets equal to that of emulsions based on native whey proteins. Native proteins are proteins that are not denatured.

Protein denaturation may suitably be measured by reverse phase HPLC techniques.

A preferred method to achieve the desired extent of denaturation is to ensure that the emulsion before the step of homogenisation is not heated to a temperature greater than 60°C.

It is an essential aspect of the present invention that the homogenisation is carried out at a temperature, preferably below the temperature at which there is substantial denaturation of the protein, but above the melting temperature of the fat. A suitable temperature is 60°C or below. Without wishing to be bound by theory, it is believed that the denaturation of the proteins should be effected by heating of the emulsion. If first the formation of a protein layer around the fat droplet is allowed before the protein layer is strengthened by way of formation of intermolecular disulphide bonds by the denaturation, it is believed to result in a more stable emulsion under the temperature cycling conditions.

The homogenisation step is preferably carried out in the range of 5 to 400 bar, more preferably in the range of 50 to 400, and most preferably in the range of 100 to 350 bar.

The process for preparing the product comprises the steps of homogenising, heating and acidifying. The sequence of process steps is important in achieving the desired product properties. It was found that preheating the mixture and/or acidifying the mixture before homogenisation did not lead to temperature cycling stable emulsions.

The product after homogenisation is heated. The heating conditions are chosen such that at least a part of the native undenatured protein is denatured by the heating.

The extent of denaturation of a protein is a function of the temperature it is subjected to and the time over which the protein is held at the high temperature (see e.g. Dannerberg and Kessler, Journal of Food Science 53 (1988) 258-263). The temperature/time dependency is different for each type of protein.

Hence a judicious choice of temperature and time of heating is chosen to achieve the desired degree of denaturation of the protein. The homogenised emulsion is heated to a temperature above 80°C to achieve the desired result. The time of heating is preferably from 2 to 120 minutes, more preferably longer than 5 minutes and most preferably from 5 to 120 minutes. Preferably the homogenised emulsion is heated at a temperature above 85°C for a time longer than 10 minutes, preferably longer than 15 minutes.

The heated sample is then acidified using any known method of acidification to a pH below the pH of gelling of the protein. The method by which the pH of gelling of the protein is measured is described in the experimental section.

When more than one protein is used in the process of the invention, the acidification is done at a pH below the pH of the protein having the highest pH of gelling.

When a protein like whey protein is used, the pH of gelling is about 5.8 and so in this case, the preferred pH over which the emulsion is acidified is about 5.8 to 3.8. The acidification may be carried out using acidifying bacteria or a chemical acidifying agent. When acidifying bacteria are used, the emulsion is cooled to the culturing temperature. When the desired pH is achieved, the emulsion may be heated to a high temperature preferably above 60°C to inactivate the culturing bacteria.

Optionally the product may be subjected to a further heating step and/or homogenisation step after the acidification step in any order.

Suitably the emulsion before homogenisation is prepared by mixing fat and protein, in an aqueous phase wherein the percentage of denatured protein on total protein is less than 100-(2.6 * a/b), wherein a is the amount of fat on the total product in wt% en b is the amount of total protein on the total product in wt%.

In a preferred embodiment the invention relates to a process for the preparation of a water continuous acidified emulsion comprising 15 to 25 wt% of a partly crystalline fat and 2 to 3 wt% protein, wherein the process comprises the sequence of homogenising at a temperature below 60°C, a water continuous emulsion comprising a partly crystalline fat and protein wherein the percentage of denatured protein on total protein is less than 67 %, heating to a temperature above 85°C for a time longer than 10 minutes, and acidifying to a pH below the pH of gelling of the protein having the highest pH of gelling in the emulsion.

According to another embodiment, the invention relates to a process for the preparation of a water continuous acidified emulsion comprising 15 to 50 wt% partly crystalline fat and 1 to 6 wt% protein, wherein the process comprises the sequence of homogenising at a temperature below 60°C a water continuous emulsion comprising fat and protein wherein the percentage of denatured protein is less than 20% on total protein, heating to a temperature and for sufficient time to prepare an emulsion wherein the percentage of denatured protein is more than 20% on total protein and acidifying to a pH below the pH of gelling of the protein having the highest pH of gelling in the emulsion.

Preferably in this embodiment after the heating step the percentage of denatured protein is more than 30% and even more preferably more than 40%.

Preferably the emulsion before homogenisation is prepared by mixing fat and protein, in an aqueous phase where the percentage of denatured protein is less than 20% on total protein.

It is preferred that the process of the invention comprises use of an edible non-dairy fat for example vegetable fat.

The vegetable fat may be selected from any edible source but it is preferred that the fat is chosen from coconut oil, palm kernel oil, palm oil, soyabean oil, rapeseed oil, sunflower oil, safflower oil or hydrogenated products thereof or blends thereof.

The process according to the present invention is in particular suitable for fat or fat b1 ends with a specific fatty acid composition. Triglycerides can be denoted according to their fatty acid composition. Herein U stands for cis-mono- and cis-polyunsaturated fatty acids, H stand for long-chain saturated fatty acids, of 16 carbon atoms (C16) and longer, M is medium-chain saturated fatty acids, i.e. C12 and C14, and Sh is short-chain saturated fatty acids, i.e. C10 and shorter. For example HM2 stands for a triglyceride having one long-chain saturated fatty acids of C16 and longer and two medium-chain saturated fatty acids, (C12-C14).

The present invention is especially suitable for fat blend wherein the combined amount of HM2, M3, MSh2, M2Sh, and HMSh is at least 46 wt% and the amount of U3 is less than 28 wt%, and the combined amount of U3 and H2U is less than 30 wt%, based on total fatty acids.

Fatty acid analysis can suitable be performed with GLC following their conversion to apolar, methyl ester derivatives (FAME) (see e.g. Walter Jennings, Eric Mittlefehldt, Philip Stremple, "Analytical gas chromatography", Academic Press; 2 edition (January 15, 1997) .

Very suitable fat blends according to the convention comprise fully hardened coconut fat, fully hardened palmkernel oil, palm oil and/or palm oil fractions.

The partially crystalline fat preferably comprises at least 50 wt% of fully hardened coconut fat or at least 55 wt% of fully hardened palm kernel oil or combinations of x wt% of fully hardened coconut fat and y wt% of fully hardened palm kernel oil, wherein x + (50/55)y is at least 50, based on weight of fat. More preferably the partially crystalline fat comprises at least 60 wt% of fully hardened coconut fat or fully hardened palm kernel oil and more preferably at least 70 wt% of fully hardened coconut fat or fully hardened palm kernel oil. When combinations of x wt% of fully hardened coconut fat and y wt% of fully hardened palm kernel oil are used preferably x + (50/55)y is at least 60 wt% and more preferably at least 70 wt%. Preferably less than 90% wt of the fat comprises fully hardened coconut fat or fully hardened palm kernel oil or combinations thereof.

It is preferred that the process of the invention is carried out using a chemical acidifying agent. When a chemical acidifying agent is used, the agent may be added at any temperature and preferably the temperature to which the emulsion is heated is not changed before adding the chemical acidifying agent. The chemical acidifying agent is any food grade agent which may effect lowering of the pH to the desired range. Preferred acidifying agents are citric acid, hydrochloric acid and acetic acid.

A preservative may be added at any stage of the process to ensure a longer shelf life of the product. Any food grade preservative may be added, the preferred ones being potassium sorbate, nisin and acetic acid.

In another embodiment of the present invention biopolymers may be added to the emulsion at an amount of 0-0.5 wt%. Preferably the biopolymer is added before homogenisation. Guar, high-methoxy pectin and gelatine are suitable biopolymers.

The invention also provides for a water continuous acidified emulsion comprising fat and protein as prepared by the process of the invention. The emulsions of the invention are stable under temperature cycling. Stable under temperature cycling means that the d_{3,2} value of the droplets in the emulsion does not change by more than 25% percent over three temperature cycles, each cycle consisting of four hours at 25°C and twenty hours at 5°C.

The invention thus provides for a water continuous acidified emulsion comprising fat and protein, having a pH in the range of 5.8 to 3.8. The fat is present in this emulsion in the range of 15 to 50% more preferably from 15 to 25%. Protein is present from 1 to 6 wt% preferably from 1 to 4 wt%, more preferably from 2 to 4 wt% and most preferably from 2 to 3 wt%. It is particularly preferred that the protein is whey protein.

Preferably the firmness value of the product does not change by more than 25 percent over three temperature cycles, each at of 5°C. The procedure for measuring the firmness value as Stevens firmness is set out below.

### Experimental section

### Measurement of the gelling pH of a protein

The gelling pH may be determined by preparing a protein solution at the same concentration as the water phase of the emulsion. Other relevant parameters, such as salt concentration should be kept identical to the water phase composition of the emulsion as well. The slowly dissociating acid glucono-deltalactone (GDL) is added in a concentration such that the change in pH is slow at the gelling pH of the protein. The exact amount depends on the protein sample, but a typical value would be 1% GDL in a 3% protein solution. Immediately after addition of the GDL, the solution is loaded in a stress-controlled rheometer (e.g. Carrimed AR1000) and the storage and loss moduli G' and G" are measured for a small oscillation amplitude (in the linear viscoelastic regime, strain typically 10⁻³). If tan delta = G"/G' decreases to unity, the pH of the solution at this point is taken as the gelling pH of the protein solution.

### Stevens firmness

The firmness of the products is determined by measuring the force required to penetrate a cylindrical probe in the product. The peak force (by custom expressed in gram, g; 1 g = 9.81 mN) is recorded, and averaged over triplicate measurements. Sample height 5 cm; cylindrical probe of 0.5 inch thickness; compression rate 2 mm/s; penetration depth 20 mm. A suitable machine may be a Stable Micro Systems TA-XT2 Texture Analyzer.

### d_{3,2} value measurements

O/w emulsions were filled to a height of 15 mm in NMR tubes of 10 mm diameter, and thermally equilibrated for 30 min at 20 °C. A restricted diffusion-based droplet size was obtained by means of pfg-NMR using a Bruker Minispec MQ20. The details of the technique are discussed by Goudappel et al (Journal of Colloid and Interface Science 239, (2001) 535-542). A measurement yields values for the volume weighted geometric mean diameter d_{3,3} and the width of the droplet size distribution when plotted as a function of the logarithm of the diameter σ. These parameters can be converted to the surface weighted mean diameter d_{3,2} using the relation d_{3,2}=d_{3,3}·exp(-σ²/2). Measurements were carried out in triplicate and results are expressed in terms of average d_{3,2} values. Definitions of droplet sizes are given by Alderliesten (Particle and Particle Systems Characterization 7 (1990) 233-241, and ibid 8 (1991) 237-241).

### Method to determine solid fat content

The solid fat content (%) may be measured by a suitable analytical method such as NMR. The method used is low resolution NMR with Bruker Minispec apparatus. Reference is made to the Bruker minispec application notes 4,5 and 6.

The percentage of solid fat is determined in bulk fat by low resolution NMR and is defined as the ratio of the response obtained from the hydrogen nuclei in the solid phase and the response arising from all the hydrogen nuclei in the sample (American Oil Chemist Society, AOCS, 1999. Official method Cd 16b-93). The product of this ratio and one hundred is termed the low resolution NMR solid fat content. No correction is made for variations in the proton density between solid and liquid phase. The NMR solid fat content for a sample measured at t °C is given the symbol Nₜ.

Suitable instruments adapted to determine the solid fat content are the Bruker Minispecs p20i, pc20, pc120, pc120s, NMS120 and MQ20.
Stabilisation and tempering procedure was as follows:
melt fat at 80 °C
5 minutes at 60 °C
about 1 day at 0 °C
30-35 minutes at each chosen measuring temperature.

### Denaturation of protein measurements.

Ferreira, Mendes and Ferreira (Analytical Sciences 17 (2001) 499-501 describe a HPLC/UV method to analyze proteins in dairy-type products, which has been adapted for the present purpose.

The chromatographical analysis was carried out using a gradient pump (Shimadzu; LC-10Ai) and degasser (Shimadzu; DGU-14A). Gradient elution was carried out with a mixture of two solvents: Eluent A: 0.04% trifluoroacetic acid in Milli-Q water; Eluent B: 0.04% trifluoroacetic in acetonitrile/Milli-Q water (95/5); Flow: 1 ml/min. The elution profile is given in the table below. Auto injector (Shimadzu; SIL-10AD) with a 5 µl injection volume. The analysis time is 32 minutes.

| Time (min) | % Eluent A | % Eluent B |
|---|---|---|
| 0 | 90 | 10 |
| 8 | 63.1 | 36.9 |
| 18 | 53 | 47 |
| 23 | 48 | 52 |
| 27 | 48 | 52 |
| 28 | 90 | 10 |
| 32 | 90 | 10 |

The analytical column (Hamilton) was filled with a Polymeric Reversed Phase (PRP-1) column containing a polystyrene-divinylbenzene copolymer-based packing (column length 150mm; diameter 4.1 mm; particle size 10 µm; pore size in particle 10 nm). The temperature of the column was controlled using a Column Thermostat (Separations; Mistral) at 50°C. The effluent was monitored using a UV/VIS detector (Shimadzu; SPD 10A): λ1: 214 nm, λ2: 280 nm, Range: 1.0, Aux range: 2.

Each protein was identified by means of retention time (one peak at ∼17 min for α-lactalbumin, two peaks at ∼24 and ∼26 min for β-lactoglobulin) and quantified by comparing the peak area to results for a calibration series with pure native standards for α-lactalbumin and β-lactoglobulin with known concentrations in the range of 1-5 mg/ml.

The invention will now be demonstrated with respect to the following non-limiting examples.

### Examples

### Comparative Example -A:

A premix oil-in-water emulsion was prepared by mixing the following: vegetable fat (1:1 mixture of fully hardened coconut oil and fractionated palm oil, N₅=73%, N₂₀=14%, N₂₅=2.4%) at 30%, 4% native whey protein concentrate (Nutrilac QU7560, ex Arla, powder containing 75% protein) potassium sorbate at 0.1% and demineralised water. The mix was then heated to 50°C in about 20 minutes, subsequently homogenised in an APV Lab1000 homogeniser at 300 bar, and then packed in 100 ml tubs (6.5 cm diameter), sealed and placed for storage in a refrigerator at 5°C. The product has a pH of 6.8.

### Comparative Example -B:

A product as per Comparative Example A was prepared except that the sample was acidified using a 50% citric acid solution in demineralised water to a pH of 4.5 after it was homogenised but before being packed.

### Comparative Example-C:

A premix as in comparative example A was first prepared. The premix was heated to a temperature of 85°C in about 20 minutes. The heated mixture was then homogenised in an APV Lab1000 homogeniser at 300 bar. The sample was then acidified to a pH of 4.5 using a 50% citric acid solution in demineralised water. The product was then packed in 100 ml tubs (6.5 cm diameter), sealed and placed for storage in a refrigerator at 5°C.

### Comparative Example-D

A premix as in comparative example A was first prepared. The premix at a temperature of 50°C was first homogenised in an APV Lab1000 homogeniser at 300 bar. The sample was then heated to a temperature of 85°C in about 20 minutes. The product having a pH of 6.8 was then packed in 100 ml tubs (6.5 cm diameter), sealed and placed for storage in a refrigerator at 5°C.

### Comparative Example -E:

A product as per Comparative Example C was prepared except that the partly crystalline fat blend in the composition was replaced by (liquid) sunflower oil.

### Comparative Example -F:

A product as per Comparative Example C was prepared except that the partly crystalline fat blend in the composition was replaced by crystalline butterfat.

### Example-1

A premix as in comparative example A was first prepared. The premix at a temperature of 50°C was first homogenised in an APV Lab1000 homogeniser at 300 bar. The sample was then heated to a temperature of 85°C in about 20 minutes and then acidified to a pH of 4.5 using a 50% citric acid solution in demineralised water. The product was then packed in 100 ml tubs (6.5 cm diameter), sealed and placed for storage in a refrigerator at 5 °C.

All samples were stored in the refrigerator at 5°C for one week and then subjected to experiments of cycling temperature changes that involved three cycles, each cycle consisting of 20 hours at 5°C and 4 hours at 25°C. At the beginning and the end of the three cycles, the samples were then measured for the d_{3,2} value and the firmness values, as herein above described. The measured values are summarised in Table-1.

**Table-1**

| Sample | d_{3,2} start µm | d_{3,2} end µm | Firmness start, g | Firmness end, g |
|---|---|---|---|---|
| Comp. Exp -A | 0.86 | 0.92 | 0 | 0 |
| Comp. Exp -B | 0.89 | 1.51 | 43 | 120 |
| Comp. Exp -C | 0.95 | 1.85 | 355 | 970 |
| Comp. Exp -D | 1.09 | 1.02 | 0 | 0 |
| Comp. Exp -E | 0.75 | 0.71 | 65 | 72 |
| Comp. Exp -F | 0.77 | 0.90 | 260 | 300 |
| Example -1 | 1.10 | 1.15 | 580 | 526 |

The data in Table-1 indicates that butter fat (comparative example F) and non-crystalline liquid oil (comparative example E) are stable under temperature cycling. Furthermore, it shows that the process as per the invention (example 1) provides for a firm emulsion that retains its desired properties when subjected to cycling temperature changes and this is not achieved with the processes of the prior art.

## Claims

1. Process for the preparation of a water continuous acidified emulsion spread comprising 15 to 50 wt% of a partly crystalline fat with a solid fat content at 5 °C of at least 40% and a solid fat content at 25 °C between 0.1-10% and 1 to 6 wt% protein, wherein the process comprises the sequence of
a) homogenising at a temperature below 60°C, a water continuous emulsion comprising a partly crystalline fat and protein wherein the percentage of denatured protein on total protein is less than 100-(2.6 * a/b), wherein a is the amount of fat on the total product in wt% and b is the amount of total protein on the product in wt%,
b) heating to a temperature above 80°C for a time longer than 5 minutes, and
c) acidifying to a pH below the pH of gelling of the protein having the highest pH of gelling in the emulsion.

2. Process according to claim 1 wherein the emulsion comprises 15 to 25 wt% of a partly crystalline fat and 2 to 3 wt% protein, wherein the process comprises the sequence of
a) homogenising at a temperature below 60°C, a water continuous emulsion comprising a partly crystalline fat and protein wherein the percentage of denatured protein on total protein is less than 67 %,
b) heating to a temperature above 85°C for a time longer than 10 minutes, and
c) acidifying to a pH below the pH of gelling of the protein having the highest pH of gelling in the emulsion.

3. Process according to claim 1 or 2 wherein the emulsion before homogenisation is prepared by mixing fat and protein, in an aqueous phase.

4. Process for the preparation of a water continuous acidified emulsion comprising 15 to 50 wt% partly crystalline fat with a solid fat content at 5 °C of at least 40% and a solid fat content at 25 °C between 0.1-10% and 1 to 6 wt% protein, wherein the process comprises the sequence of
a) homogenising at a temperature below 60°C, a water continuous emulsion comprising fat and protein wherein the percentage of denatured protein is less than 20% on total protein.
b) heating to a temperature and for sufficient time to prepare an emulsion wherein the percentage of denatured protein is more than 20% on total protein and
c) acidifying to a pH below the pH of gelling of the protein having the highest pH of gelling in the emulsion.

5. Process according to claim 4 wherein the emulsion before homogenisation is prepared by mixing fat and protein, in an aqueous phase where the percentage of denatured protein is less than 20% on total protein.

6. Process according to any of claim 1 to 5 wherein the fat is a vegetable fat.

7. Process according to any of claim 1 to 6, wherein the partially crystalline fat has a fatty acid composition wherein the combined amount of HM2, M3, MSh2, M2Sh, and HMSh is at least 46 wt% and the amount of U3 is less than 28 wt%, and the combined amount of U3 and H2U is less than 30 wt%, based on total fatty acids, wherein U stands for cis-mono and cis-polyunsaturated fatty acids, H stands for saturated fatty acids of 16 carbon atoms and longer, M stands for saturated fatty acids of 12 and 14 carbon atoms, and Sh stands for saturated fatty acids of 10 carbon atoms and shorter.

8. Process according to claim 7 wherein the partly crystalline fat comprises least 50 wt% of fully hardened coconut fat or at least 55 wt% of fully hardened palm kernel oil or combinations of x wt% of fully hardened coconut fat and y wt% of fully hardened palm kernel oil, wherein x + (50/55)y is at least 50, based on weight of fat.

9. Process according to any of claim 1 to 8 wherein the product of step (b) is acidified in step (c) to a pH in the range of 5.8 to 3.8.

10. A process according to any of claims 1 to 9, wherein the protein is a whey protein.

11. A water continuous acidified emulsion obtainable by the process according to any of claims 1 to 10.

## Patentansprüche

1. Verfahren zur Herstellung eines gesäuerten Emulsionsaufstrichs mit kontinuierlicher wässriger Phase, umfassend 15 bis 50 Gew.-% eines teilweise kristallinen Fetts mit einem Gehalt an festem Fett bei 5 °C von wenigstens 40 % und einem Gehalt an festem Fett bei 25 °C zwischen 0,1 und 10 % und 1 bis 6 Gew.-% Protein, wobei das Verfahren die folgende Sequenz umfasst:
a) Homogenisieren einer Emulsion mit kontinuierlicher wässriger Phase, umfassend ein teilweise kristallines Fett und Protein, in dem der prozentuale Anteil von denaturiertem Protein, bezogen auf das Gesamtprotein, weniger als 100-(2,6 * a/b) ist, worin a die Menge an Fett, bezogen auf das gesamte Produkt, in Gewichtsprozent ist und b die Menge an Gesamtprotein, bezogen auf das Produkt, in Gewichtsprozent ist, bei einer Temperatur unter 60 °C,
b) Erwärmen auf eine Temperatur über 80 °C für eine Zeit, die länger als 5 Minuten ist, und
c) Säuern auf einen pH unter dem pH des Gelierens des Proteins, das den höchsten pH des Gelierens in der Emulsion hat.

2. Verfahren nach Anspruch 1, wobei die Emulsion 15 bis 25 Gew.-% eines teilweise kristallinen Fetts und 2 bis 3 Gew.-% Protein umfasst, wobei das Verfahren die folgende Sequenz umfasst:
a) Homogenisieren einer Emulsion mit kontinuierlicher wässriger Phase, umfassend ein teilweise kristallines Fett und Protein, in dem der prozentuale Anteil an denaturiertem Protein, bezogen auf das Gesamtprotein, weniger als 67 % ist, bei einer Temperatur unter 60 °C,
b) Erwärmen auf eine Temperatur über 85 °C für eine Zeit, die länger als 10 Minuten ist, und
c) Säuern auf einen pH unter dem pH des Gelierens des Proteins, das den höchsten pH des Gelierens in der Emulsion hat.

3. Verfahren nach Anspruch 1 oder 2, wobei die Emulsion vor Homogenisieren hergestellt wird, indem Fett und Protein in einer wässrigen Phase gemischt werden.

4. Verfahren zur Herstellung einer gesäuerten Emulsion mit kontinuierlicher wässriger Phase, umfassend 15 bis 50 Gew.-% teilweise kristallines Fett mit einem Gehalt an festem Fett bei 5 °C von wenigstens 40 % und einem Gehalt an festem Fett bei 25 °C von zwischen 0,1 und 10 % und 1 bis 6 Gew.-% Protein, wobei das Verfahren die folgende Sequenz umfasst:
a) Homogenisieren einer Emulsion mit kontinuierlicher wässriger Phase, umfassend Fett und Protein, in dem der prozentuale Anteil an denaturiertem Protein weniger als 20 %, bezogen auf das Gesamtprotein, ist, bei einer Temperatur unter 60 °C,
b) Erwärmen auf eine Temperatur und für eine ausreichende Zeit, um eine Emulsion herzustellen, in der der prozentuale Anteil an denaturiertem Protein mehr als 20 %, bezogen auf das Gesamtprotein, ist, und
c) Säuern auf einen pH unter dem pH des Gelierens des Proteins, das den höchsten pH des Gelierens in der Emulsion hat.

5. Verfahren nach Anspruch 4, wobei die Emulsion vor Homogenisierung hergestellt wird, indem Fett und Protein in einer wässrigen Phase gemischt werden, in der der prozentuale Anteil an denaturiertem Protein weniger als 20 %, bezogen auf das Gesamtprotein, ist.

6. Verfahren nach einem der Ansprüche 1 bis 5, wobei das Fett ein Pflanzenfett ist.

7. Verfahren nach einem der Ansprüche 1 bis 6, wobei das teilweise kristalline Fett eine Fettsäurezusammensetzung hat, in der die kombinierte Menge an HM2, M3, MSh2, M2Sh und HMSh wenigstens 46 Gew.-% ist und die Menge an U3 weniger als 28 Gew.-% ist, und die kombinierte Menge an U3 und H2U weniger als 30 Gew.-% ist, bezogen auf die gesamten Fettsäuren, wobei U für cis-mono- und cis-polyungesättigte Fettsäuren steht, H für gesättigte Fettsäuren mit 16 Kohlenstoffatomen und länger steht, M für gesättigte Fettsäuren mit 12 und 14 Kohlenstoffatomen steht, und Sh für gesättigte Fettsäuren mit 10 Kohlenstoffatomen und kürzer steht.

8. Verfahren nach Anspruch 7, wobei das teilweise kristalline Fett wenigstens 50 Gew.-% vollständig gehärtetes Kokosnussfett oder wenigstens 55 Gew.-% vollständig gehärtetes Palmkernöl oder Kombinationen von x Gew.-% vollständig gehärtetes Kokosnussfett und y Gew.-% vollständig gehärtetes Palmkernöl umfasst, wobei x + (50/55)y wenigstens 50 ist, bezogen auf das Gewicht von Fett.

9. Verfahren nach einem der Ansprüche 1 bis 8, wobei das Produkt von Schritt (b) in Schritt (c) auf einen pH im Bereich von 5,8 bis 3,8 gesäuert wird.

10. Verfahren nach einem der Ansprüche 1 bis 9, wobei das Protein ein Molkeprotein ist.

11. Gesäuerte Emulsion mit kontinuierlicher wässriger Phase, erhältlich durch das Verfahren nach einem der Ansprüche 1 bis 10.

## Revendications

1. Procédé pour la préparation d'une émulsion aqueuse acidifiée continue à étaler comprenant de 15 à 50 % en poids d'une matière grasse partiellement cristalline ayant une teneur en matière grasse solide à 5°C d'au moins 40 % et une teneur en matière grasse solide à 25°C de 0,1 à 10 %, et de 1 à 6 % en poids de protéine, dans lequel le procédé comprend la séquence de
a) homogénéisation à une température inférieure à 60°C, d'une émulsion aqueuse continue comprenant une matière grasse partiellement cristalline et une protéine, où le pourcentage de protéine dénaturée par rapport à la protéine totale est inférieur à 100-(2,6xa/b), où a est la quantité de matière grasse dans le produit total en % en poids et b est la quantité de protéine totale dans le produit en % en poids,
b) chauffage à une température supérieure à 80°C pendant une durée supérieure à 5 minutes, et
c) acidification à un pH inférieur au pH de gélification de la protéine ayant le pH de gélification le plus élevé dans l'émulsion.

2. Procédé selon la revendication 1, dans lequel l'émulsion comprend de 15 à 25 % en poids d'une matière grasse partiellement cristalline et de 2 à 3 % en poids de protéine, dans lequel le procédé comprend la séquence de
a) homogénéisation à une température inférieure à 60°C, d'une émulsion aqueuse continue comprenant une matière grasse partiellement cristalline et une protéine où le pourcentage de protéine dénaturée par rapport à la protéine totale est inférieur à 67 %,
b) chauffage à une température supérieure à 85°C pendant une durée supérieure à 10 minutes, et
c) acidification à un pH inférieur au pH de gélification de la protéine ayant le pH de gélification le plus élevé dans l'émulsion.

3. Procédé selon la revendication 1 ou 2, dans lequel l'émulsion avant l'homogénéisation est préparée par mélange de la matière grasse et de la protéine, dans une phase aqueuse.

4. Procédé pour la préparation d'une émulsion aqueuse acidifiée continue comprenant de 15 à 50 % en poids d'une matière grasse partiellement cristalline ayant une teneur en matière grasse solide à 5°C d'au moins 40 % et une teneur en matière grasse solide à 25°C de 0,1 à 10 %, et de 1 à 6 % en poids de protéine, dans lequel le procédé comprend la séquence de
a) homogénéisation à une température inférieure à 60°C, d'une émulsion aqueuse continue comprenant une matière grasse et une protéine où le pourcentage de protéine dénaturée par rapport à la protéine totale est inférieur à 20 %,
b) chauffage à une température et pendant une durée suffisante pour préparer une émulsion dans laquelle le pourcentage de protéine dénaturée par rapport à la protéine totale est supérieur à 20 %, et
c) acidification à un pH inférieur au pH de gélification de la protéine ayant le pH de gélification le plus élevé dans l'émulsion.

5. Procédé selon la revendication 4, dans lequel l'émulsion avant l'homogénéisation est préparée en mélangeant une matière grasse et une protéine, dans une phase aqueuse où le pourcentage de protéine dénaturée par rapport à la protéine totale est inférieur à 20 %.

6. Procédé selon l'une quelconque des revendications 1 à 5, dans lequel la matière grasse est une matière grasse végétale.

7. Procédé selon l'une quelconque des revendications 1 à 6, dans lequel la matière grasse partiellement cristalline a une composition en acide gras où la quantité combinée de HM2, M3, MSh2, M2Sh et HMSh est au moins de 46 % en poids et la quantité de U3 est inférieure à 28 % en poids, et la quantité combinée de U3 et H2U est inférieure à 30 % en poids, par rapport aux acides gras totaux, où U représente les acides gras cis-mono- et cis-polyinsaturés, H représente les acides gras saturés de 16 atomes de carbone et plus, M représente les acides gras saturés de 12 et 14 atomes de carbone, et Sh représente les acides gras saturés de 10 atomes de carbone et moins.

8. Procédé selon la revendication 7, dans lequel la matière grasse partiellement cristalline comprend au moins 50 % en poids de matière grasse de noix de coco totalement durcie ou au moins 55 % en poids d'huile de palmiste totalement durcie ou des combinaisons de x % en poids de matière grasse de noix de coco totalement durcie et de y % en poids d'huile de palmiste totalement durcie, où x + (50/55)y vaut au moins 50, par rapport au poids de la matière grasse.

9. Procédé selon l'une quelconque des revendications 1 à 8, dans lequel le produit de l'étape (b) est acidifié dans l'étape (c) à un pH compris dans la plage allant de 5,8 à 3,8.

10. Procédé selon l'une quelconque des revendications 1 à 9, dans lequel la protéine est une protéine lactosérique.

11. Émulsion aqueuse acidifiée continue pouvant être obtenue par le procédé selon l'une quelconque des revendications 1 à 9.
